# EUROPEAN PATENT APPLICATION

(11) **EP 0 949 777 A2**
(43) Date of publication of application: **13.10.1999**
(21) Application number: 99302615.2
(22) Date of filing: 01.04.1999
(51) Int. Cl.: H04J 14/02, H04J 14/08, H04J 3/08

(54) **Path switched shared protection**

(30) Priority: 08.04.1998 GB 9807583
(71) Applicant: NORTEL NETWORKS CORPORATION, Montreal, Quebec H2Y 3Y4 (CA)
(72) Inventor: Brent, Allen, Kanata, Ontario K2K 2X3 (CA)
(74) Representative: Ryan, John Peter William

(57) **Abstract**

A fiber optic communications system comprises a plurality of nodes arranged in a ring. A plurality of channels are established on the ring. The nodes have means for adding/dropping channels allocated thereto to permit non-overlapping connections between pairs of end nodes allocated to the same channel. A shared protection channel is established around the ring for each allocated working channel, and each end node is arranged to transfer traffic to the protection channel on a per-connection basis in the event of a fault on any connection between a pair of nodes.

## Description

### BACKGROUND OF THE INVENTION

### Field of the Invention

This invention relates to fiber optic telecommunication transport networks, and more particularly to a path switched ring with shared protection capabilities for providing survivability of traffic in the event of network failure.

### Background Art

Increasing the transmission capacity of a network is of a major interest to network providers. This is currently done by increasing the transmission rate using TDM (time division multiplexing), or/and using the WDM (wavelength division multiplexing) or dense WDM (DWDM) techniques.

Some terms pertaining to transport networks are defined next.

An add/drop multiplexer (ADM) is a network element that combines and separates a plurality of client signals, each carried in a predetermined time-slot, for TDM or by a wavelength/channel, for D/WDM. An ADM directs the electrical variant of the optical multichannel signal according to its destination to a local user (a drop signal), or to a remote user (passthrough or express signal). Add signals may be inserted at the respective ADM node of the network, also in an electronic format. Optical ADMs are also available, and preferably used in D/WDM networks.

SONET/SDH (Synchronous Optical Network/Synchronous Digital Hierarchy) is a physical layer standard for fiber-optic transmissions. SONET defines the transmission of synchronous and isochronous information over fiber-optic networks.

Ring topologies are the preferred method of providing survivability in fiber-optic telecommunications transport networks, such as SONET. Survivability is the capability of the transport network to restore traffic in the event of a network failure, such as a fiber cable cut. In a ring, there are at least two diverse paths for accommodating traffic in opposite directions between any two points on the ring. In the event of a failure preventing traffic from traversing any point on the ring, the affected traffic can be rerouted the other way around the ring to avoid the failure point. This is known as protection switching.

The physical layer of SONET is modelled on three major entities, transmission path, multiplex section and regenerator section, each layer requiring the services of all lower layers to perform its own function. These layers correspond to SONET path, line and section connections.

The path layer deals with establishing a connection between two nodes of interests, for transporting services, such as DS1 or DS3. Such a node is called path terminating node, and could be ADMs or terminals serving routers, bridges, PBXs or switches. The services and the path-specific information, including path integrity information are mapped into the format required by the line layer, which is called STS-1 frame.

The line layer provides synchronization and multiplexing for the path layer. A line is a portion of the transmission facility between two consecutive nodes provided with line terminating equipment (LTE). The LTEs could be add-drop multiplexers or terminals (TM) and the multiplexed frame comprises interleaved STS-1s and line-specific information, including line integrity information.

The section layer deals with the transport of multiplexed signals across a physical medium.

The term "normal mode of operation" refers to the operation of the ring of the present invention when all connections between the ring nodes are un-interrupted and the node operated without fault. The term "failure mode of operation " or "protection switched" or "switched" refers to the operation of the ring when the connection between some ring nodes is interrupted due to a cable cut or a node failure.

The term "working" refers to the routes and equipment involved in carrying the traffic during the normal mode of operation, and the term "protection" refers to the routes and equipment involved in carrying the traffic during the failure mode of operation. The terms "unidirectional" and "bidirectional" protection switching refer to modes of the protection protocol and should not be confused with the terms "unidirectional" and "bidirectional" connections.

Currently, two types of SONET/SDH rings are used, namely, unidirectional path switched rings (UPSR), and bidirectional line switched rings (BLSR). Each type of ring has its own advantages and disadvantages

The operation of UPSRs is standardized by the BellCore GR-1400-CORE standard, and there are SONET OC-3/12 products available. The UPSR uses integrity information carried across the traffic connection to trigger a protection switching. The mechanism operates independently on each path across the ring and has the key advantage that it is not dependent on a multiplex frame with its own integrity information, i.e., it operates well as long as each connection carries its own integrity information.

The key disadvantage of the UPSR is that it requires a dedicated protection channel around the ring for each working channel. One bi-directional protected connection uses one entire timeslot or wavelength all the way around the ring in both directions. Thus, a SONET OC-12 UPSR can support 12 connections, and a 16 wavelength LPSR can support 16 connections, regardless of the connectivity pattem.

The BLSR are currently used in the backbone networks and therefore they are built for higher SONET rates, such as OC-48, OC-192. Switching is done at the SONET line layer. The operation of BLSRs is standardized by the BellCore GR-1230-CORE standard, and there are OC-12/48 products available. The BLSR has the advantage of shared protection. Multiple connections can reuse the same timeslot or wavelength on the ring, as long as the connections do not overlap on any part of the ring. This has significant cost advantages when the connectivity pattem is highly meshed, i.e. when each node is connected with a plurality of other nodes of the ring. In order to do this, the BLSR uses the integrity information carried in a multiplex flame to trigger protection activity.

However, this multiplex flame is a disadvantage in WDM rings, which inherently consist of a number of independent wavelengths. In addition, the BLSR switches all channels simultaneously at the nodes adjacent to the failure. This is also a disadvantage in WDM (Wavelength Division Multiplex) rings because it implies the need for optical switches, which are not yet a cost-effective component for such systems.

### SUMMARY OF THE INVENTION

An object of the invention is to alleviate totally or in part the above-mentioned disadvantages of the prior art.

According to a first aspect of the present invention, there is provided a fiber optic communications system comprising a plurality of nodes arranged in a ring, multiplexing means for establishing a plurality of channels on said ring, means at said nodes for adding/dropping channels allocated thereto to permit non-overlapping connections between pairs of end nodes allocated to the same channel, means for establishing a shared protection channel around said ring for each allocated working channel, and means at said end nodes for transferring traffic to said protection channel on a per-connection basis in the event of a fault on any connection between a pair of nodes.

In a preferred embodiment, a number of ADM nodes are connected in a closed loop called a ring. The interconnection between adjacent nodes preferably comprises two optical fibers, each carrying traffic in one direction. Each fiber carries a number of channels that are multiplexed together onto the fiber. The multiplexing method may be TDM (time-division multiplexing) where each connection is allocated a time-slot, or WDM (wavelength-division multiplexing), where each connection is established on a different wavelength, or any other multiplexing method.

The connections can define a mesh structure between pairs of adjacent or nonadjacent nodes reusing the same channels between certain nodes, so long as the connections do not overlap, i.e. there cannot be more than one connection sharing the same channel on the same segment of the ring.

The novel ring structure embodies a survivability mechanism that combines the advantages of the UPSR and the BLSR, providing a solution that has particular value in WDM rings, but can be applied to TDM rings such as SONET/SDH rings. Switching is performed end-to-end on a per connection basis as in the UPSR, but there is no need for a multiplex frame, while providing the benefits of shared protection.

The invention offers a cost-effective means of addressing highly meshed traffic patterns in metropolitan interoffice WDM rings.

The switching around the ring can be coordinated using a modified SONET/SDH BLSR-type protocol.

According to a further aspect of the invention, there is provided a method of operating a fiber optic communications system having a plurality of nodes arranged in a ring, comprising the steps of:
selecting at least a first and a second pairs of nodes and establishing a first-type corresponding first and second non-overlapping connection on said ring;
establishing a shared protection connection around said ring for said first type non-overlapping connections; and transferring traffic from said first connection to said protection channel, in the event of a fault on said first connection

### BRIEF DESCRIPTION OF THE DRAWINGS

The foregoing and other objects, features and advantages of the invention will be apparent from the following more particular description of the preferred embodiments, as illustrated in the appended drawings, where:
**Figure 1** shows an example of a fiber optic ring with bi-directional connections;
**Figure 2** shows a protection switching scenario for a BLSR;
**Figure 3** shows a path switched shared protection ring (PSSPR) in accordance with the principles of the invention;
**Figure 4** shows a first protection switching scenario for the PSSPR of Figure 3;
**Figure 5** shows a second protection switching scenario for the PSSPR);
**Figure 6** is a block diagram of a node of the PSSPR in normal mode of operation;
**Figure 7** shows the configuration of a PSSPR node in a passthrough mode;
**Figure 8** shows the configuration of a PSSPR node with a failure on the West side; and
**Figure 9** shows the configuration of a PSSPR node with a failure on the East side.

### DESCRIPTION OF THE PREFERRED EMBODIMENT

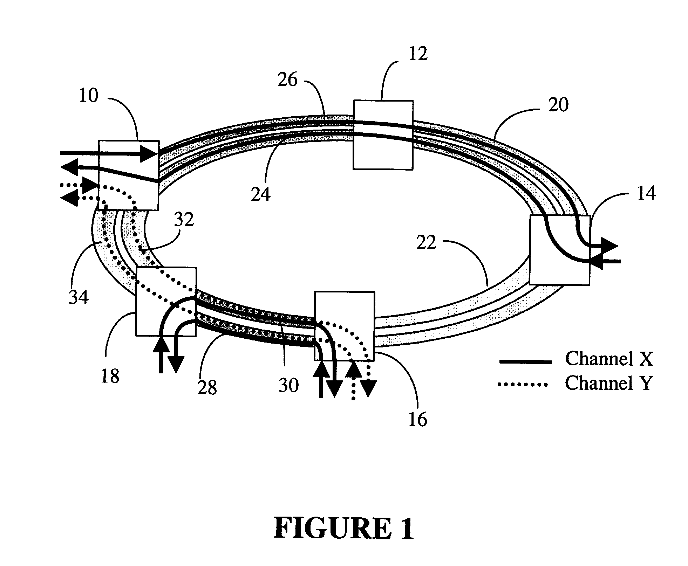

Figure 1 shows an optic fiber ring **1** comprising five ADM nodes **10**, **12, 14, 16** and **18** connected over fibers **20** and **22** in a ring configuration. Each fiber carries a number of channels that are multiplexed together onto the fiber. Connections are established the between pairs of nodes, using for example TDM (time division multiplexing) or WDM (wavelength division multiplexing) techniques. Bidirectional connections may be established between any two ADM or terminal nodes, in which case each node of the pair adds/drops signals from/to a local service platform to/from another node, over that connection. If a node is not a terminal node with respect to a given connection, it passes through the signals not addressed to it.

In order to establish a connection between two nodes, there must be a channel/timeslot available along the entire route between the two nodes. If one channel/timeslot is being used on some parts of the path for another connection, then another channel/timeslot must be chosen. However, a channel/timeslot can be reused for two different connections, as long as those connections do not overlap on any part of the ring.

The term "channel" is used in general in this specification for designating the type of connection between two nodes, since the preferred application of the present invention is to WDM rings. However, this invention is equally applicable to TDM rings, and in such a configuration, this term should be interpreted as "time-slot" .

In this specification, the terms "first-type" and "second-type" describing a connection refer to a WDM or a TDM type connection, while the term "first class" and "second class" in connection with the traffic on a certain connection refers for example to SONET traffic, Ethemet traffic, etc.

As shown in Figure 1, a bidirectional connection **24, 26** is established on a first bidirectional channel X between nodes **10** and **14**, and an additional bidirectional connection **28, 30** is established on the same bidirectional channel X between nodes **16, 18**. As indicated above, channel X represents a particular wavelength in a WDM system or a particular time-slot in a TDM system, and is illustrated in solid lines on Figure 1.

Another bidirectional connection **32, 34** is established on another channel, lets say channel Y between nodes **10** and **16**. Channel Y has a different wavelength than channel X and is illustrated in dotted lines on Figure 1.

It is to be noted that connections **32, 34** can overlap connections **28, 39**, because they are carried on different channels X, Y. This is shown on the span between nodes **16** and **18**. On the other hand, connections **24, 26** and **28, 30**, are carried on the same channel X and therefore must not overlap.

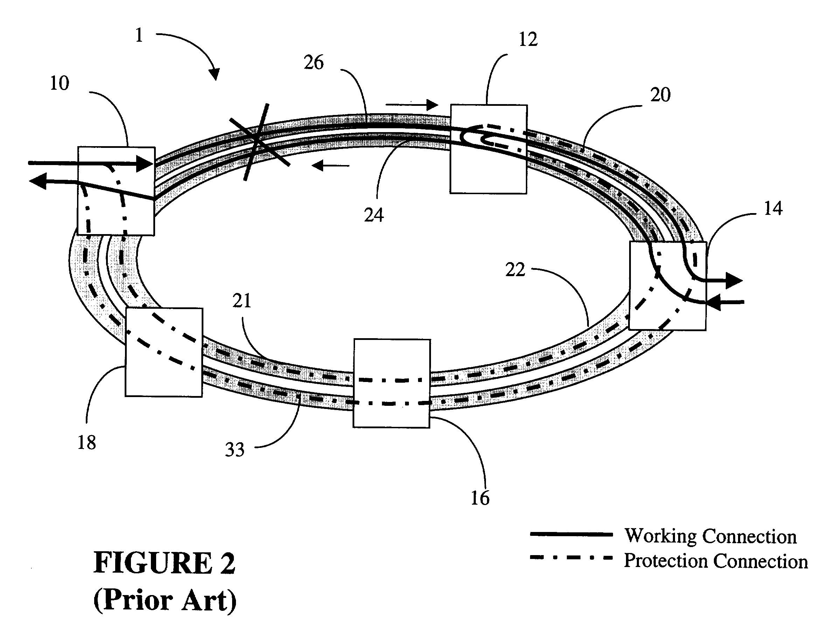

Figure 2 illustrates an example of how a BLSR **2** operates in case of a protection switching operation. In a BLSR each fiber carries working and protection signals in alternate timeslots, in one direction of fiber **20** and respectively in the opposite direction on fiber **22**. Each node **10, 12**, **14, 16**, and **18** monitors the incoming multiplex frame to evaluate integrity information. When a failure occurs, as shown for example between nodes **10** and **12**, nodes **10** and **12** adjacent the failure detect the break (a loss of signal), and change their operating state accordingly. they also inform the remaining nodes of the failure, so that the nodes operate accordingly.

Namely, for the direction from node **14** to node **10** shown by full line **24**, node **12** detects the failure and switches the traffic form the working slots on fiber **22**, into the protection time-slots on fiber **20**, shown in dash-dotted line **37**. The traffic passes through nodes **14, 16**, and **18** and arrives at the destination node **10** in the protection time-slots. Destination node **10** assumes a bridged state and drops the traffic from fiber **20**, rather than from fiber **22**. For the opposite direction, node **10** inserts the traffic, normally added in the working time-slots on fiber **22**, into the protection time-slots on fiber **20**. The traffic for node **14** travels through nodes **18, 16, 14** to node **12**, where frames are switched from the protection time-slots on fiber **22** to the working time-slots on fiber **20**, towards destination node **14**.

This can significantly increase the propagation delay, as in the protection switching scenario shown in Figure 2, traffic has to pass twice between nodes **12** and **14**. Node 14 is unaware of the failure in the BLSR because only adjacent nodes **10** and **12** have that information. Also, nodes **10** and **12** have no visibility of per connection integrity information. As a result this mechanism does not work well for WDM channels.

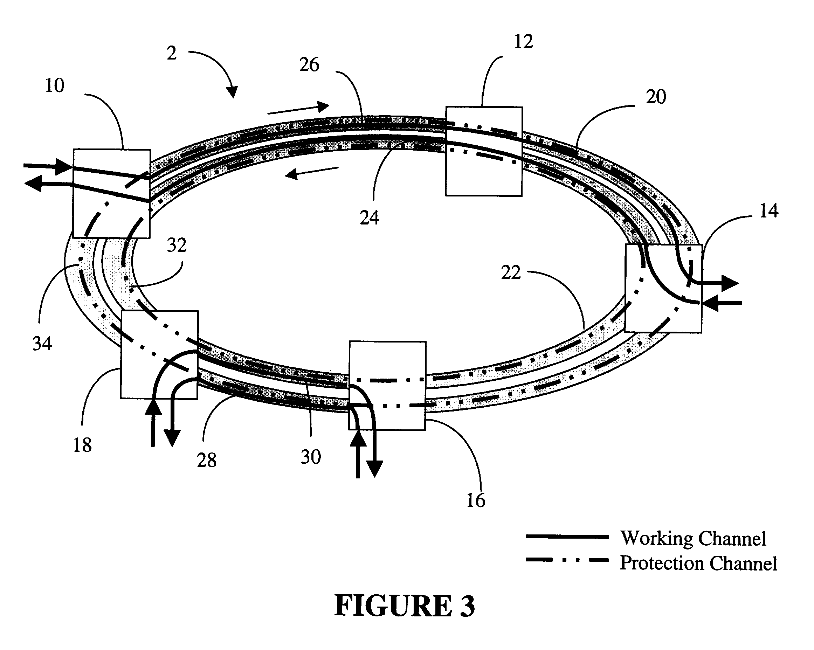

Figure 3 illustrates a path switched shared protection ring (PSSPR) **2** according to the invention. In this example there are two bidirectional connections using channel X, namely bidirectional connection **24, 26** between nodes **10** and **14** and bidirectional connections **28, 30** between nodes **16** and **18**. channel provided for the ring of Figure 1 according to the invention.

In order to protect against failures on the ring, such as fiber cable cuts, a protection connection, shown on Figure 3 as channel Z, is reserved for all connections that carry traffic on channel X. Since there is more than one connection on wavelength X, the protection channel Z is being shared. The protection channel is illustrated in dash-dotted line and designated with reference numerals **32, 34**. This protection channel Z is provided all the way around the ring in both directions. Note that there would be a separate protection channel to protect against failures that affect connections on channel Y, etc.

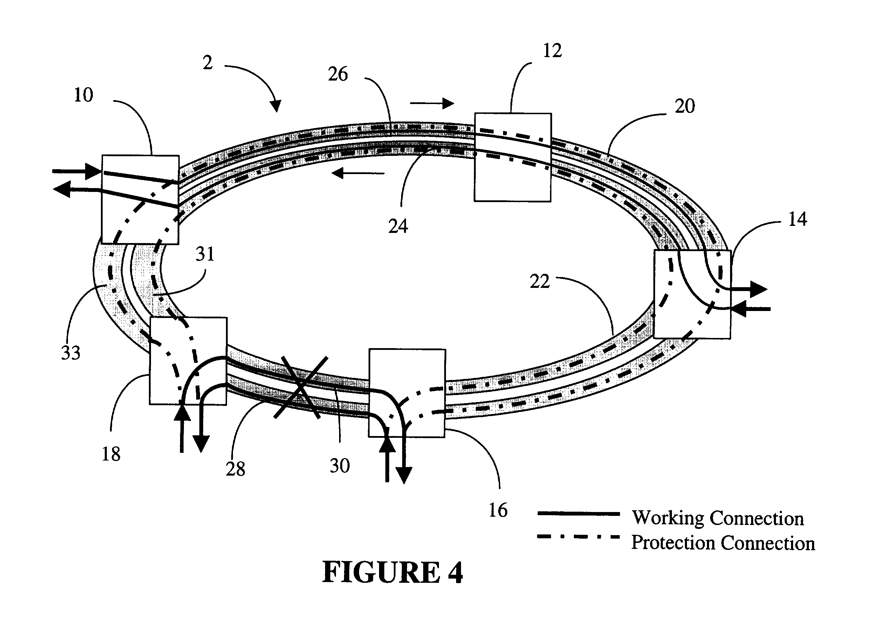

Figure 4 illustrates what happens when a fault, such as a break occurs between nodes **18** and **16**. Since the connection between the nodes is not confined into a frame, the traffic between these nodes can be readily switched to connections **31, 33** on the protection channel, and service resumes as normal while the fault is corrected. The traffic between nodes **10** and **14** on connections **24** and **26** is not affected by this protection switching operation. The only difference is that the end nodes **18** and **16** add/drop the traffic in/from the opposite direction than that in the normal state of operation.

Thus, for the add direction, node **16** inserts the traffic for node **18** towards East, on fiber **22**, rather than towards West, on fiber **20**. Also, for the drop direction, node **16** selects the traffic received from node **18** on fiber **20** from the East direction, rather than the traffic received on fiber **22** from the West direction. Node **18** operates in a similar way. As such, the protection switching mode of operation is simplified, the terminal nodes for a respective connection being responsible with detecting the failure and selecting the traffic from the correct direction. This results in a simpler node configuration and faster protection times than in the prior art.

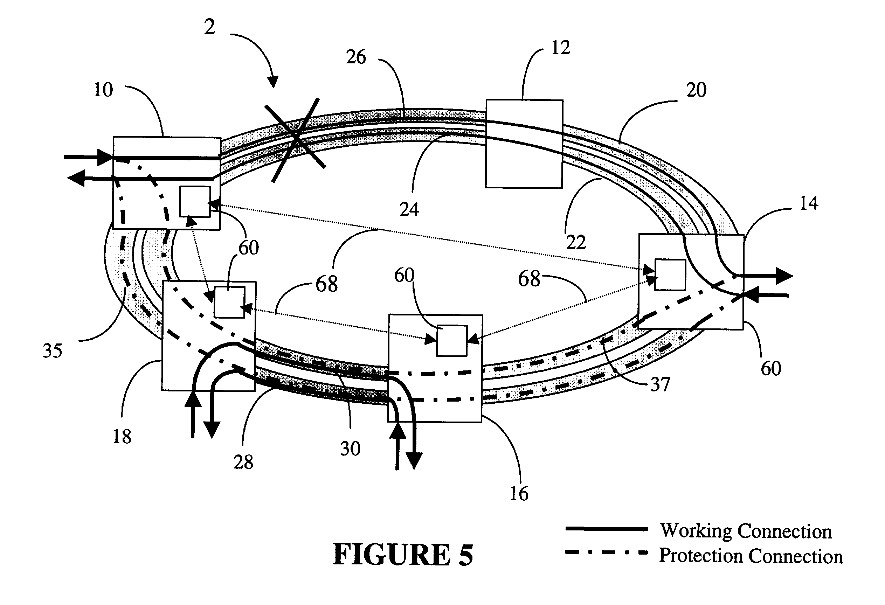

Figure 5 show how the bidirectional protection connections **35** and **37** are used to protect against failures that affect the fiber between nodes **10** and **12**. As in the previous case, once the failure is detected, the terminal nodes insert the add traffic along the other fiber, and select the drop traffic from the other fiber than the fiber selected during the normal mode of operation. In this case, the ring node **10** selects the drop traffic received over channel Z from fiber **20**, and inserts the add traffic over channel Z along fiber **22**. Conversely, terminal node **14** inserts the add traffic for node **10** on channel Z along fiber **20**, and selects the drop traffic arriving on channel Z from fiber **22**.

All ring nodes that add/drop from the affected channel, which is in this example channel X, must coordinate access to the corresponding protection channel, here channel Z. A communications path is provided around the ring to support a protection switching coordination protocol for this purpose. This is intuitively shown on Figure 5 by protection arbitrator (or protection monitor) **60**, which is distributed between all the nodes that add/drop channel X, which are in the example of Figure 5, nodes **10, 14**, **16** and **18**.

In other words, a ring node cannot arbitrarily switch its protection selectors upon detection of a failure, because the ring node at the other end of the connection may not be observing any failure, or there may be another failure somewhere else on the ring such that other ring nodes are already using the protection channel. All ring nodes that access a particular working channel must communicate via a protection switching coordination protocol associated with the protection channel that protects the working channel. Nodes that do not access the working channel do not need to communication on the coordination protocol that controls access to the associated protection channel.

The protocol and the method of communication of the coordination protocol must have the following characteristics:
- The failure of the working connection between two nodes must not prevent the protection coordination protocol from operating properly.
- Since the protocol must take place before the protection switch can be completed, the protocol and its communications channel must be fast enough to support objectives for protection switch completion times.
- The protocol must support the identification of the failed connection, or the two nodes on either end of the connection so that the right segment of the protection channel is utilized.
- The protocol must support the ability to reject a protection switch if the protection channel is already in use because of a prior failure elsewhere on the ring.
- The protocol may support different priorities of failures, either by assigning different levels of importance to different connections, or by having different degrees of failure. This would allow an existing protection switch to be preempted by another that has a higher degree of failure, or is protecting a more important connection.
- The protocol may support access to the protection channel by low priority connections when the protection channel is not required for protection purposes.
- The protocol may support either revertive or non-revertive protection switching. In revertive protection switching, the protection channel is released immediately or after some waiting period, when the failure has cleared. In non-revertive protection switching, the protection channel remains in use until another failure condition occurs requiring its use.

This coordination protocol provides the benefits of shared protection while avoiding the need for a multiplex frame.

All of the incoming channels at a node are also monitored to determine their integrity. This includes the incoming working and protection channels from both the West and East sides. The mechanisms used to determine the integrity of the channel is not the object of the invention; it rather depends on the protocols goveming a specific type of data carried by the respective channel. As such, these mechanisms can be different for different channels. This is particularly advantageous if the WDM ring carries traffic with different protocols.

For example, if one channel is carrying SONET traffic, then SONET integrity mechanisms can be used to determine the integrity of the channel for protection purposes. However, if another channel is carrying Ethemet, then Ethemet-based integrity mechanisms can be used to determine the integrity of that channel. Alternatively, physical layer (optical layer) integrity information, such as signal to noise ratio and optical receive power can be used regardless of whether the wavelength is carrying SONET or Ethernet.

The integrity information may be processed separately by an integrity monitor, or the protection arbitrator 60 may carry out this processing. Since the way the integrity mechanism work is not relevant to this invention, these two types of functionality are illustrated as being provided by unit **60**.

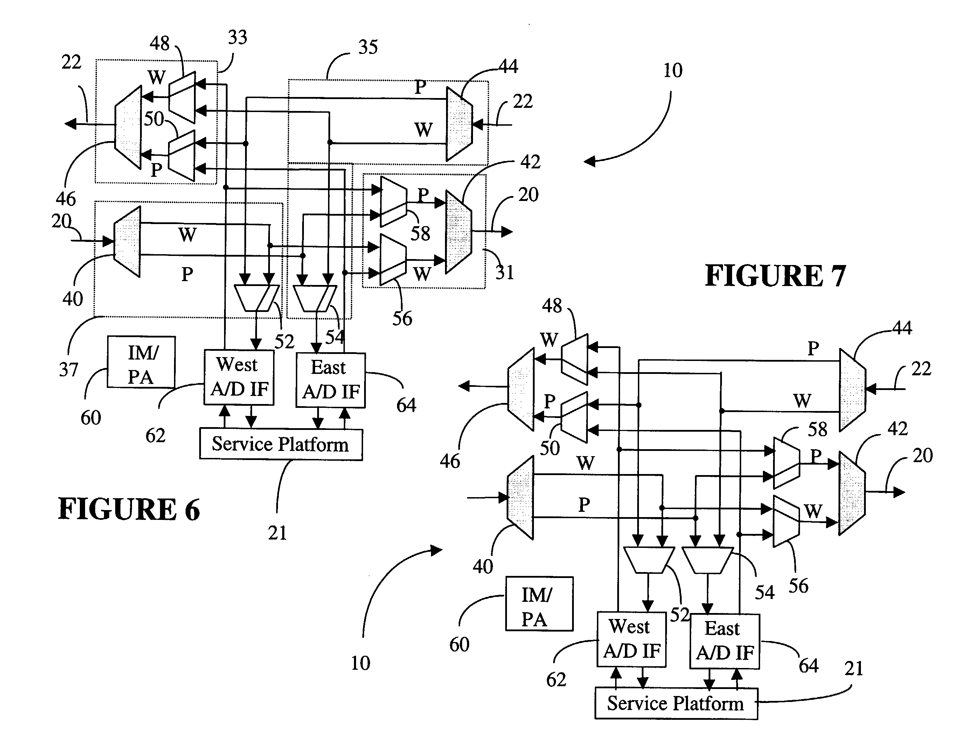

If a node is accessing a channel, then it is normally configured as shown in Figure 6. Figure 6 shows node **10** of PSSP ring **2** and the protection switching circuitry at this ring node, for the example shown in Figure 3. As such, the circuitry shown is for channel X which is add/dropped at node **10**, and its associated protection channel Z. For consistency with recognized terminology, the term working channel (W) also designates channel X, while the term protection channel (P) also designates channel Z. Similar circuitry must be provided for all other channels (connections) for which this node has add/drop access.

Node 10 is shown in a normal mode of operation, i.e. there is no failure detected on connection X between nodes **10** and **14**.

In the following, terms East and West are used to describe the direction of the traffic relative to a node under consideration, or the side of a node. It will be understood that reference to East - West and West - East directions, or East and West sides does not imply any geographic orientation, but they are merely relative terms.

Each ADM node, such as node **10** is equipped with a first East selector unit **31**, a first West selector unit **33**, a second East selector unit **35** and a second West selector unit **37** for each connection. These selector units select the respective add traffic and insert it on one of the working or protection connections, according to the state of the node. A West and an East add/drop interfaces **62** and **64** are provided to connect the node **10** with a service platform **21**. Each interface has an input port for receiving the respective Eastbound or Westbound drop traffic, and an output port for providing the respective Eastbound and Westbound add traffic.

As shown in Figure 3, the traffic added at node **10** travels on connection **26** along fiber **20** towards node **14**, while the traffic from node **14** arrives at node **10** on connection **24** along fiber **22**. The protection channel Z passes through node **10** unchanged. As such, the first East selector unit **31** of Figure 6 routes the add traffic from service platform **21** along fiber **20** towards node **14**, and the second East selector unit **35** routes the drop traffic received from node **14** along fiber **22** to the service platform **21**.

As in this example there is no add/drop traffic on the West side of node **10**, and therefore the selector units on the West side only route the protection channels. Thus, protection channel **34** is passed from the input of second West selector unit **37** to the output of the first East selector unit **31**, and the protection channel **32** is passed from the input of second East selector unit **35** to the output of first West selector unit **33**.

The first East selector unit **31** comprises a multiplexer **42** connected to output fiber **20** and selectors **58** and **56** connected to the service platform through add/drop interfaces **62** and **64**. Similarly to the first East selector unit, the first West selector unit **31** comprises a multiplexer **46** connected to the output fiber **22**, and selectors **48** and **50** connected to service platform through add/drop interfaces **62** and **64**.

The second East selector unit **35** comprises a demultiplexer **44**, connected to input fiber **22**, and a selector **54** connected to the service platform **21** through add/drop interfaces **62** and **64**. Finally, the second West selector unit **37** comprises a demultiplexer **40**, connected to input fiber **20**, and a selector **52** connected to the service platform through add/drop interfaces **62** and **64**.

The position of the selectors is intuitively illustrated by a solid line connecting a respective input and output. Where no line is shown between the input and output, the selector is deemed not to route any signal.

The working and protection channels are selected by selectors **48, 50, 52, 54, 56, 58** under the control of integrity monitor and protection arbitrator IMPA **60**, which sets the configuration of the node according to integrity information on the traffic.

Thus, regarding traffic on fiber **20**, associated with the West-East direction with respect to node **10**, demultiplexer **40** separates the traffic arriving at node **10** according to the wavelength, into working traffic (hereinafter called the W-E drop working traffic), and protection traffic (hereinafter called the W-E drop protection traffic).

The W-E drop working traffic is then directed to selectors **52** and **56** for routing according to the state of the node. In this case, W-E drop working traffic is directed by selector **52** to the West interface **62**, and dropped to the service platform. Position of selector **56** disallows W-E traffic to be inserted on fiber **20** towards East.

The traffic added by East interface **64** must be inserted in the West-East direction on fiber **20**, along connection **26**, and therefore is referred hereinafter as the W-E add working traffic. The W-E add working traffic is presented to both selectors **50** and **56**. According to the state of the node, selector **56** routes this add traffic to multiplexer **42**, which in tum combines it with the output of selector **58** and inserts the multiplexed channels towards East along fiber **20**. Position of selector **50** disallows W-E add working traffic to be inserted on the protection channel on fiber **20** towards West.

The West-East protection traffic is routed from demultiplexer **40** to multiplexer **42** by selector **58**, and it cannot be dropped at East interface because of the position of selector **54**. The W-E protection traffic is reinserted on connection **34** and its content is unchanged, as it is not subjected to add/drop operations at node **10**. Position of selector **58** disallows add traffic from being presented to multiplexer **42** by interface **62**.

Regarding traffic on fiber **22**, associated with the East-West direction with respect to node **10**, demultiplexer **44** separates the traffic arriving at node **10** according to the wavelength, into working traffic (hereinafter called the E-W drop working traffic), and protection traffic (hereinafter called the E-W drop protection traffic). The E-W drop working traffic is then directed to selectors **48** and **54** for routing according to the state of the node. In this case, E-W drop working traffic is directed by selector **54** to the East interface **64**, and dropped to the service platform. Position of selector **48** prohibits E-W traffic to be inserted on fiber **22** towards West.

The traffic added by West interface **62** must be inserted in the East-West direction on fiber **22**, along connection **26**, and therefore is referred hereinafter as the E-W add working traffic. The E-W add working traffic is presented to both selectors **48** and **58**. In this case, selector **48** routes this add traffic to multiplexer **46**, which in turn combines it with the output of selector **50** and inserts the multiplexed channels towards East along fiber **22**. Position of selector **58** disallows E-W add working traffic to be inserted on the protection channel on fiber **20**.

The East-West protection traffic is routed from demultiplexer **44** to multiplexer **46** by selector **50**, and it cannot be dropped at East interface **62** due to the position of selector **52**. The E-W protection traffic is reinserted on channel Z and its content remains unchanged, as it is not subjected to add/drop operations at node **10**.

If a node is not accessing a particular channel, this node does not require access to the protection switching protocol for this channel since it never participates in the switching associated with this channel. Figure 7 shows node **10** operating in a passthrough (passthru) mode, i.e. where it is not accessing a particular channel. In this case, selectors **48, 50, 56, 58** are set as shown, while selectors **52** and **54** disallow communication with the respective West and East interfaces **62** and **64** in both add and drop directions.

For the West-East direction associated with fiber **20**, W-E working traffic is separated from the protection channel by demultiplexer **40**, and selector **56** routes it to input of multiplexer **42** as shown. Selector **52** disallows W-E working traffic from being dropped at the West interface **62**, while selector **56** disallows any add working traffic from being presented to multiplexer **42** by East interface **64**. Similarly, the protection traffic is routed from demultiplexer **40**, through selector **58** to the input of multiplexer **42**. Selector **58** disallows any add traffic from being presented to multiplexer **42** by interface **62**, and selector **54** disallows E-W protection traffic to be presented to East interface **64**. Multiplexer **42** multiplexes the working and protection channels onto fiber **20** towards East direction.

The arrangement is similar in the reverse (East-West) direction associated with fiber **22**. Thus, E-W working traffic is separated from the protection channel by demultiplexer **44**, and selector **48** routes it to input of multiplexer **46** as shown. Selector **54** disallows E-W working traffic from being dropped at the East interface **64**. Similarly, the protection traffic is routed from the demultiplexer **44**, through selector **50** to the input of multiplexer **46**. Selector **52** disallows E-W protection traffic from being dropped at West interface **62**. Multiplexer **46** multiplexes the working and protection channels onto fiber **22** towards the West direction.

As indicated above, the integrity of the traffic carried by a respective working channel is monitored at each terminal node, according to traffic-specific mechanisms, or according to a physical layer mechanism. To this end, the nodes are equipped with the integrity monitor and protection arbitrator **60**, which also communicates with other terminal nodes for the respective channel via a protection switching coordination protocol **68** shown in Figure 5 and described above by way of example.

If the arbitrator **60** detects that, for example, the incoming working channel from the West has failed, and that the incoming protection channel from the East is operating satisfactorily, then it will control the protection selectors to connect the failed working channel to the East protection channel.

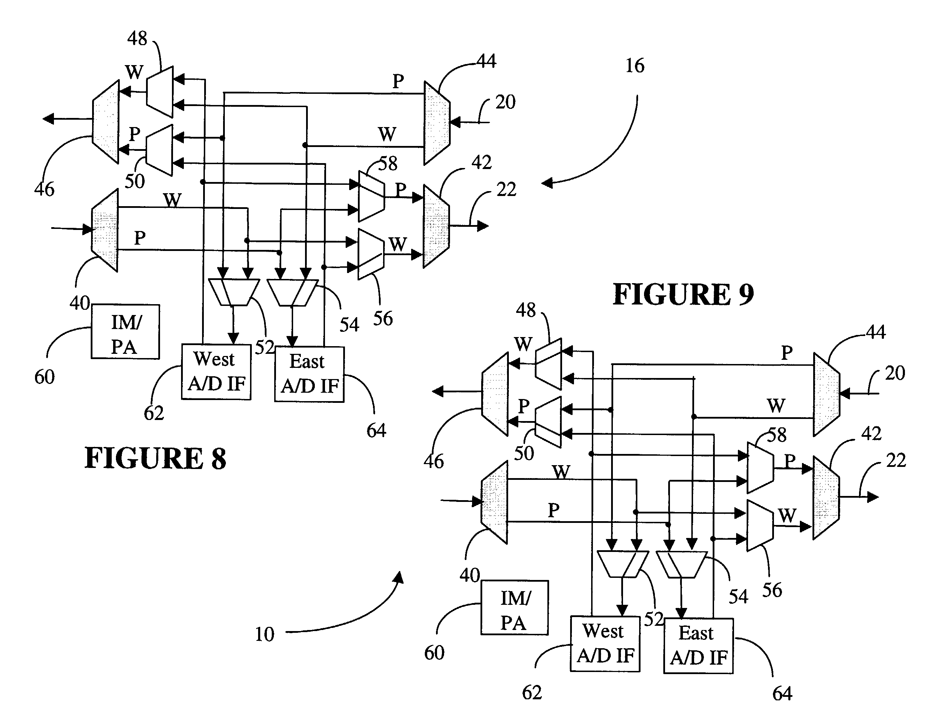

Figure 8 shows the position of selectors at a node in the case of a failure on the West side, also referred herein as a West-side failure mode of operation. Such is the case for node **16** for example, in the failure scenario shown in Figure 4. In this example, after the nodes **16** and **18** adjacent to the failure detect that connections **28** and **30** on cables **20** and **22** are interrupted, protection arbitrator **60** instructs nodes **18** and **16** to adopt a protection switched state. Now, node **18** inserts the working traffic for node **16** along fiber **20**, on protection connection **34**, as shown in Figure 4. Consequently, node **16** receives the traffic form East, rather than from West, and from the protection channel along fiber **20**, rather than on the working channel along fiber **22**. Similarly, node **16** inserts the working traffic for node **18** along fiber **22**, on protection connection **31** as shown in Figure 4, and node **16** receives the traffic form East, on fiber **20**.

To achieve the protection switched state for a West-side failure, selectors **48** and **50** adopt a position in which no signal is presented to multiplexer **46** that normally inserts the working and protection channels towards West. In this way, no signal is transmitted towards the point of failure. The drop traffic for node **16** arrives on fiber **20** to demultiplexer **44**, which separates the working and protection channels. Since the drop traffic arrives on the protection connection **33**, selector **52** connects the protection channel **33** to the West add/drop interface **62**. Selector **54** on the other hand is positioned to direct the E-W drop traffic normally arriving at this node on the working channel X. It is to be noted that in the example of Figure 4, there is no traffic on channel W arriving at node 16 from East.

Regarding the traffic from node **16** to node **18**, which is normally inserted on the working channel along fiber **20** towards West, this add traffic is now directed by selector **58** on protection connection **31** along fiber **22** towards East. The traffic added by East interface on the other hand is routed by selector **56** on the working channel X along fiber **22** towards East.

Figure 9 illustrates a similar scenario for the case of a failure at the East side of a node, also referred herein as a East-side failure mode of operation. Such a case is illustrated in Figure 5, where the failure is at the east of node **10**. In such a case, the traffic for node **14** is inserted at node **10** on the protection connection **31** along fiber **22**, from West, while the traffic from node **14** is received at node **10** on the protection connection **35** along fiber **20**, from East. Selectors **48, 50, 52** and **54** are positioned as shown in Figure 9, while selectors **58** and **56** do not allow any signals to arrive at the multiplexer **42** for insertion towards the failure point.

## Claims

1. A fiber optic communications system comprising a plurality of nodes arranged in a ring, multiplexing means for establishing a plurality of channels on said ring, means at said nodes for adding/dropping channels allocated thereto to permit non-overlapping connections between pairs of end nodes allocated to the same channel, means for establishing a shared protection channel around said ring for each allocated working channel, and means at said end nodes for transferring traffic to said protection channel on a per-connection basis in the event of a fault on any connection between a pair of nodes.

2. A fiber optic communications system as claimed in claim 1, further comprising at each input to each node demultiplexer means for separating a working channel and its associated protection channel, at each output to each mode multiplexer means for multiplexing said working channel and its associated protection channel, and selection means between said demultiplexer means and said multiplexer means for switching traffic between said protection channel and said working channel in the event of a fault on the ring.

3. A fiber optic communications system as claimed in claim 2, wherein said add/drop means comprises an add/drop interface for each ring direction.

4. A fiber optic communications system as claimed in claim 1 wherein said nodes communicate via a protection switching coordination protocol to learn of faults in the ring.

5. A fiber optic communications system as claimed in claim 1, means for transferring traffic comprises a protection arbitrator which communicates with other nodes in the ring via said protection switching coordination p.

6. A path switched shared protection ring PSSPR of a plurality of ADM nodes comprising:
at a first pair of nodes, means for establishing a fist-type bi-directional connection between the nodes of said first pair, for exchanging a first class traffic;
at all nodes, means for establishing a first dedicated bi-directional shared protection connection around said ring, associated with said first-type connection;
means for changing the mode of operation of the nodes of said first pair between a normal mode of operation and a failure mode of operation in the event of a fault; and
means for monitoring the integrity of the information carried by said first class traffic between the nodes of said first pair, for detecting said fault and for controlling said means for changing accordingly.

7. A path switched shared protection ring PSSPR of a plurality of ADM nodes comprising:
at a first pair of nodes, means for establishing a fist-type bi-directional connection between the nodes of said first pair, for exchanging a first class traffic;
at a second pair of nodes, means for establishing an additional fist-type bidirectional connection between the nodes of said second pair, for exchanging a second class traffic;
at all nodes, means for establishing a first dedicated bi-directional shared protection connection around said ring, associated with said first-type connection;
means for changing the mode of operation of the nodes of one of said first pair and said second pair between a normal mode of operation and a failure mode of operation in the event of a fault; and
means for monitoring the integrity of the information carried by said first class traffic and said second class traffic, for detecting said fault and for controlling said means for changing accordingly,
wherein said additional first-type connection and said first-type connection do not overlap along any sector of said ring; and

8. A PSSPR as claimed in claim 7, wherein said first class traffic and said second class traffic are characterized by a respective transmission protocol.

9. A PSSPR as claimed in claim 7, wherein said first class traffic and said second class traffic are each characterized by a same transmission protocol.

10. A PSSPR as claimed in claim 7, further comprising:
at a further pair of nodes, means for establishing a second-type bidirectional connection between the nodes of said further pair; and
at all nodes, means for establishing a second dedicated bi-directional shared protection connection around said ring, associated with said second-type connection.

11. A PSSPR as claimed in claim 6, wherein said first-type connection is established along a WDM channel having a first wavelength and said first shared protection connection is established along a WDM channel having a reserved wavelength.

12. A PSSPR as claimed in claim 7, wherein said first-type connection, said additional first-type connection are established along a WDM channel having a first wavelength, and said first shared protection connection is established along a WDM channel having a reserved wavelength.

13. A PSSPR as claimed in claim 6, wherein said first-type connection is established along a first allocated TDM time-slot and said first shared protection connection is established along a first reserved TDM time-slot.

14. A PSSPR as claimed in claim 7, wherein said first-type connection and said additional first-type connection are established along a first allocated TDM time-slot and said first shared protection connection is established along a first reserved TDM time-slot.

15. A PSSPR as claimed in claim 6, wherein said means for changing comprises a protection arbitrator distributed between the nodes of said first pair and said further pair, operating according to a protection switching coordination protocol.

16. A PSSPR as claimed in claim 6, wherein said means for monitoring comprises an integrity monitor specific to said first class traffic.

17. A PSSPR as claimed in claim 7, wherein said means for monitoring comprises a first integrity monitor specific to said first class traffic and a second integrity monitor specific to said second class of traffic.

18. An ADM node for a path switched shared protection ring comprising:
a first West selector unit connected to an outgoing West fiber for routing a Westbound add signal from a service platform to a second node, when said node operates in one of a normal, a passthrough and an East-side failure modes of operation;
a first East selector unit connected to an outgoing East fiber for routing an Eastbound add signal from said service platform to said second node, when said node operates in one of a normal, a passthrough and a West-side failure modes of operation;
a second West selector unit connected to an incoming West fiber for routing an Eastbound drop signal from said second node to said service platform, when said node operates in one of a normal and an East-side failure modes of operation; and
a second East selector unit connected to an incoming East fiber for routing an Westbound drop signal from said second node to said service platform, when said node operates in one of a normal, and a West-side failure modes of operation.

19. An ADM node as claimed in claim 18, wherein said first West selector unit comprises:
a West multiplexer connected to said outgoing West fiber for multiplexing said Westbound add signal with a Westbound protection signal;
a first West selector for routing said Westbound add signal form a West-side output port of said service platform to said West multiplexer in said normal and said East-side failure modes of operation, and routing said Westbound drop signal to said West multiplexer in said passthrough mode of operation; and
a second West selector for routing said Westbound protection signal from said second East selector unit to said West multiplexer in said normal and said passthrough modes of operation, and routing said Westbound add signal from an East side output port of said service platform to said West multiplexer in said East-side failure mode of operation.

20. An ADM node as claimed in claim 18, wherein said first East selector unit comprises:
an East multiplexer connected to said outgoing East fiber for multiplexing said Eastbound add signal with an Eastbound protection signal;
a first East selector for routing said Eastbound add signal form an East-side output port of said service platform to said East multiplexer in said normal and said West-side failure modes of operation, and routing said Eastbound drop signal to said East multiplexer in said passthrough mode of operation; and
a second East selector for routing said Eastbound protection signal from said second West selector unit to said East multiplexer in said normal and said passthrough modes of operation, and routing said Eastbound add signal from a West-side output port of said service platform to said East multiplexer in said West-side failure mode of operation.

21. An ADM node as claimed in claim 18, wherein said second East selector unit comprises:
an East demultiplexer connected to said incoming East fiber for separating said westbound drop signal from a Westbound protection signal; and
a third East selector for routing said Westbound drop signal form said East demultiplexer to an East-side input port of said service platform in said normal and said West-side failure modes of operation, and routing said Westbound drop signal to said first West selector unit in said passthrough mode of operation.

22. An ADM node as claimed in claim 18, wherein said second West selector unit comprises:
a West demultiplexer connected to said incoming West fiber for separating said Eastbound drop signal from an Eastbound protection signal; and
a third West selector for routing said Eastbound drop signal form said West demultiplexer to an West-side input port of said service platform in said normal and said East-side failure modes of operation, and routing said Eastbound drop signal to said first East selector unit in said passthrough mode of operation.

23. A method of operating a fiber optic communications system having a plurality of nodes arranged in a ring, comprising the steps of:
selecting at least a first and a second pairs of nodes and establishing a first-type corresponding first and second non-overlapping connection on said ring;
establishing a shared protection connection around said ring for said first type non-overlapping connections; and
transferring traffic from said first connection to said protection channel, in the event of a fault on said first connection.

24. A method as claimed in claim 23, wherein said protection connection is passed through each node in the absence of failures on the ring.

25. A method as claimed in claim 23, wherein each node comprises a protection arbitrator for detecting said fault and controlling transfer of traffic from said first connection to said protection connection.

26. A method as claimed in claim 25, wherein said protection arbitrator communicates with other nodes on the ring over said protection channel using a protection switching coordination protocol.

27. A method as claimed in claim 23, further comprising transferring traffic on said second connection to said protection channel, in the event of a fault on said second connection.
